# EUROPEAN PATENT SPECIFICATION

(11) **EP 1 444 939 B1**
(45) Date of publication and mention of the grant of the patent: **15.02.2006**
(21) Application number: 03257422.0
(22) Date of filing: 25.11.2003
(51) Int. Cl.: A47J 37/06

(54) **Cooking apparatus**
Kochvorrichtung
Appareil de cuisson

(30) Priority: 06.02.2003 KR 2003007557
(43) Date of publication of application: 11.08.2004
(73) Proprietor: SAMSUNG ELECTRONICS CO., LTD., Suwon-City, Kyungki-do (KR)
(72) Inventor: Han, Dae-Sung, c/o 104-903, Hanshin Apt 485, Hwasung-City, Kyungki-Do (KR); Kim, Chul, c/o 283-1201, Hyundae sungwoo-3 Apt., Yongin-City, Kyungki-Do (KR); Han, Yong-Woon, c/o 1225-602, Moknyon Apt., Kunpo-City, Kyuungki-Do (KR); Jang, Seong-Deog, c/o 904-902, Apt., Sunwon-City, Kyungki-Do (KR); Hahm, Kyung-Hee, c/o 107-1603, Samsung Apt., Seoul (KR); Yeo, Joo-Yeong, c/o102-410, Hanshin Apt., Hwasung-City, Kyungki-Do (KR); Kang, Han-Seong, c/o 910-2002, Jookong Apt., Suwon-City, Kyungki-Do (KR)
(74) Representative: Robinson, Ian Michael

(56) References cited:
- CH-A- 348 486
- DE-A- 19 816 473
- US-A- 3 154 004

## Description

The present invention relates, in general, to cooking apparatuses and, more particularly, to a cooking apparatus which is capable of effectively utilizing heat generated to heat and cook food.

As is well known to those skilled in the art, cooking apparatuses are appliances which heat and cook food using heat generated by heating units.

Of these cooking apparatuses, there is a cooking apparatus which directly transmits heat to food, such as meat or sausage, to cook the food. The cooking apparatus is provided with a heating unit and a grill unit. The heating unit directly transmits heat to the food. The grill unit is mounted at a predetermined position above the heating unit to support the food so as to be spaced apart from the heating unit.

When heat is generated by the heating unit, thermal energy, such as heat and far infrared rays, is generated. The food laid on the grill unit is heated and cooked by the thermal energy radiated from a front surface of the heating unit.

However, the cooking apparatus equipped with the grill unit has a problem in that heat is directly transmitted from the heating unit to the grill unit, so that the part of food in contact with the grill unit is undesirably burnt, thus deteriorating the taste of the food and negatively affecting people's health.

Korean Patent Application No. 2002-69444 provides a cooking apparatus having a grill unit which is designed to prevent food from being burnt. In this cooking apparatus, a grill unit is provided with two water tanks and a plurality of grill pipes. The water tanks are seated on both sides of the top surface of a cabinet, and contain water therein. The grill pipes are arranged in parallel to each other between the two water tanks to connect the two water tanks to each other so that water is supplied from the water tanks to the grill pipes. Such a construction of the cooking apparatus allows a temperature of the grill pipes to be kept below a predetermined temperature although the grill pipes of the grill unit are heated by a heating unit. Thus, a part of the food in contact with the grill pipes is prevented from being undesirably burnt.

However, the above-mentioned cooking apparatus has a problem in that thermal energy, such as heat and far infrared rays, radiated from a rear surface of the heating unit is not used to cook food and is discharged to a rear portion of the heating unit, thus causing a waste of the thermal energy.

Document US-A-3 154 004 discloses a cooking apparatus according to the preamble of independent claim 1 and comprising a reflecting member provided around each heating unit.

It is an aim of the present invention to provide a cooking apparatus which is designed to effectively utilize thermal energy generated by a heating unit to cook food.

Other aims and advantages of the invention will be set forth in part in the description which follows and, in part, will be obvious from the description, or may be learned by practice of the invention.

According to the present invention there is provided an apparatus as set forth in independent claim 1. Preferred features of the invention will be apparent from the dependent claims, and the description which follows.

According to the present invention there is provided a cooking apparatus including a cabinet, a grill unit, one or more heating units, and a plurality of reflecting members. The cabinet is opened at a top surface thereof to provide an opening over which food to be cooked is laid. The grill unit is seated in the opening of the cabinet so as to support the food over the opening. The heating unit is provided in the cabinet so that a front surface thereof faces the grill unit to radiate thermal energy to the grill unit. The plurality of reflecting members are provided at predetermined positions around a rear surface of each heating unit, and are installed to be spaced apart from each other by a predetermined gap to provide an air layer between the reflecting members.

Preferably, at least one of the reflecting members is provided at a predetermined portion thereof with a projection, with an end of the projection being supported by a neighboring reflecting member so that the reflecting members are spaced apart from each other by the predetermined gap.

Preferably, the reflecting members surround upper, lower, and rear portions of the heating unit, thus guiding the thermal energy generated from the heating unit to a front of the heating unit.

For a better understanding of the invention, and to show how embodiments of the same may be carried into effect, reference will now be made, by way of example, to the accompanying diagrammatic drawings in which:
Figure 1 is an exploded perspective view of a cooking apparatus, according to an embodiment of the present invention;
Figure 2 is a sectional view of the cooking apparatus of Figure 1; and
Figure 3 is an enlarged view of a part of the cooking apparatus of Figure 2.

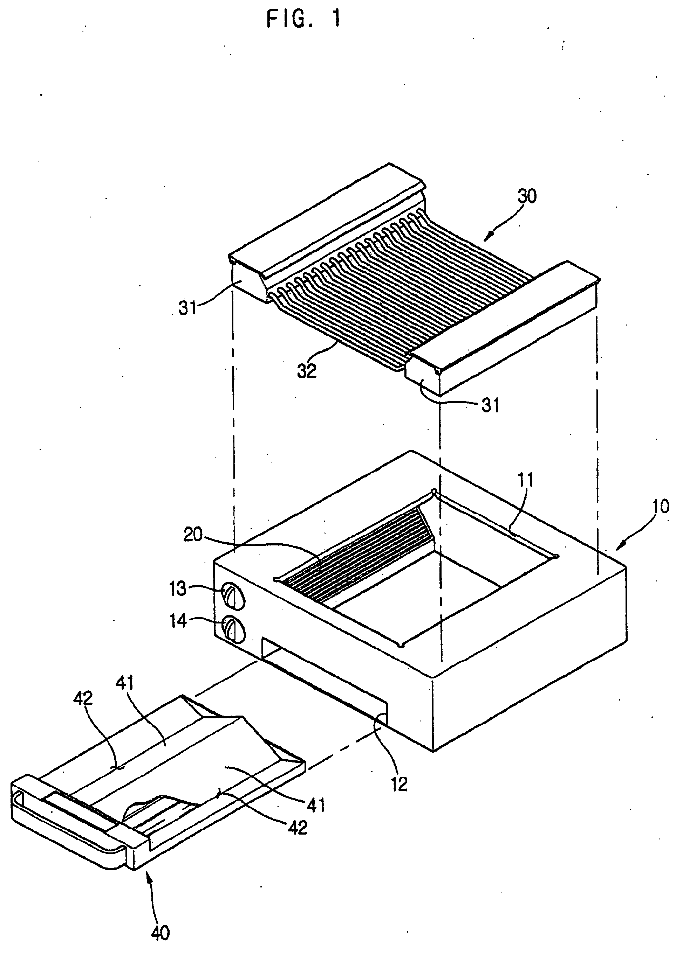

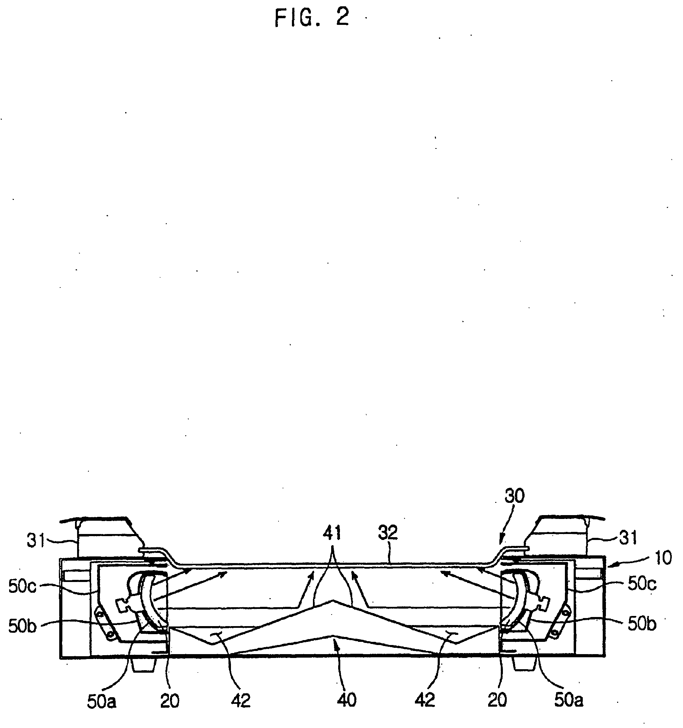

As illustrated in Figures 1 and 2, a cooking apparatus according to a preferred embodiment of the present invention includes a box-shaped cabinet 10. A plurality of heating units 20 are installed in the cabinet 10 to transmit heat to food to be cooked. A grill unit 30 on which the food is laid is seated on a top surface of the cabinet 10. The cooking apparatus also has a tray 40. The tray 40 collects materials dropping from the food laid on the grill unit 30, such as oil, and guides thermal energy from the heating units 20 to the grill unit 30.

The cabinet 10 is opened at the top surface thereof to provide an opening 11 and the grill unit 30 is seated in the opening 11, so that heat generated by the heating units 20 is transmitted to the grill unit 30. The cabinet 10 is opened at a front surface thereof so that the tray 40 is removably moved in and out the cabinet 10 through the opening, to be received in a cavity 12 provided in an interior of the cabinet 10. A timer switch 13 to control operation time of the heating units 20, and a power switch 14 to control heating temperature are provided at a surface of the cabinet 10.

The heating units 20 each include a ceramic member with a heating element to generate thermal energy, such as heat and far infrared rays. The heating units 20 are set in both sides of the cavity 12 so that front surfaces of the heating units 20 are opposite to each other. Further, the heating units 20 are inclinedly arranged to tilt toward the opening 11 to transmit the thermal energy to the grill unit 30 which is seated in the opening 11.

The grill unit 30 includes two water tanks 31, and a plurality of grill pipes 32. The water tanks 31 are seated on both sides of the top surface of the cabinet 10, and contain water therein. The grill pipes 32 are arranged between the two water tanks 31 to connect the two water tanks 31 to each other, and have hollow structures so that water flows therein. Thus, the grill pipes 32 are continuously cooled by water supplied by the water tanks 31, thus preventing food in contact with the grill pipes 32 from being burnt.

The tray 40 is formed with a hump along a central axis thereof, and provided with reflecting plates 41 at both sides of the hump, thus reflecting the heat or far infrared rays from the heating units 20 to the grill unit 30. An oil collecting groove 42 is provided along a lowermost edge of each reflecting plate 41 to collect oil dropping from the food which is laid on the grill unit 30. Further, although not shown in the drawings, a predetermined amount of water is contained in the tray 40 so as to prevent an excessive rise in the temperature of the oil collecting grooves 42 and the reflecting plates 41, thus preventing oil collected in the oil collecting grooves 42 from being burnt and adhered to the tray 40.

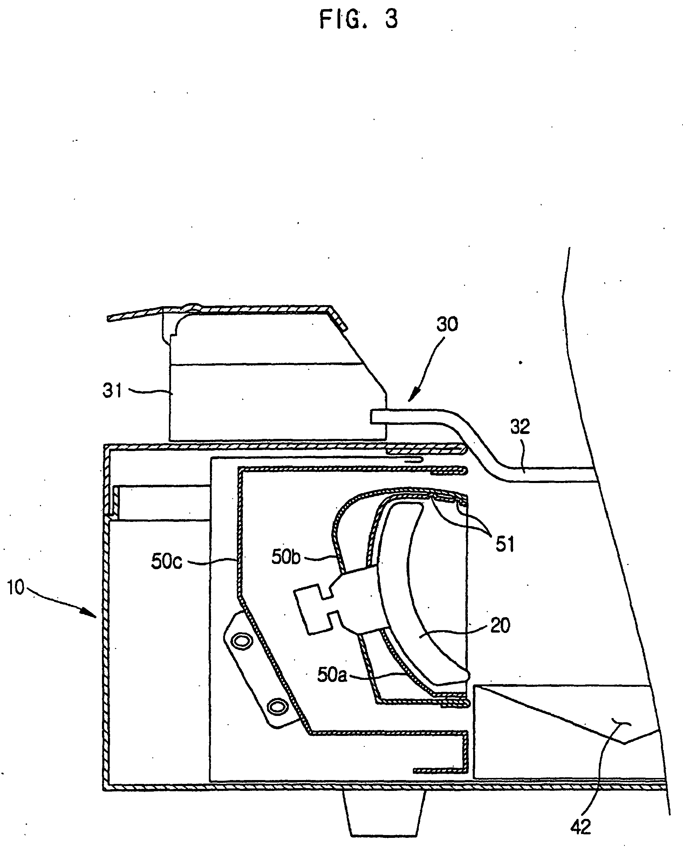

As illustrated in Figure 3, the cooking apparatus according to the present invention also includes reflecting members 50a, 50b, and 50c. The reflecting members 50a, 50b, and 50c guide thermal energy from a rear surface of each heating unit 20 to the opening 11 over which the food to be cooked is laid.

The reflecting members 50a, 50b, and 50c surround upper, lower, and rear portions of each heating unit 20, and are spaced apart from each other by a predetermined distance to provide an air layer between the reflecting members 50a, 50b, and 50c. According to the embodiment of the present invention, the cooking apparatus is provided with the three reflecting members 50a, 50b, and 50c to surround the upper, lower, and rear portions of each heating unit 20. For convenience of description, the reflecting members 50a, 50b, and 50c will be hereinafter referred to as first, second, and third reflecting members, respectively.

The far infrared rays generated by each heating unit 20 are repeatedly reflected by the three reflecting members 50a, 50b, and 50c to be guided to the front of the heating unit 20. The heat generated by each heating unit 20 is thus limitedly transmitted to a rear portion of the heating unit 20 due to a heat insulating effect of the air layer provided between the three reflecting members 50a, 50b, and 50c, so most of the thermal energy generated from each heating unit 20 is transmitted to the front of the heating unit 20 and is used to cook food.

Further, according to the embodiment of the present invention, a plurality of projections 51 are provided at a predetermined portion of the first reflecting member 50a so that the first reflecting member 50a is spaced apart from the second reflecting member 50b by the predetermined gap. The projections 51 are projected toward the second reflecting member 50b so that an end of each projection 51 is supported by the second reflecting member 50b, thus keeping the first reflecting member 50a spaced apart from the second reflecting member 50b.

An operation and operational effect of the cooking apparatus according to the present invention will be described below.

When power is applied to the cooking apparatus after laying food on the grill unit 30, heat and far infrared rays are generated from the heating units 20 provided at both sides of the cabinet 10 so as to heat and cook the food. In this case, water serving as a coolant is contained in the oil collecting grooves 42, thus preventing temperature of the oil collecting grooves 42 from exceeding a predetermined value.

At this time, thermal energy, such as the heat and far infrared rays, is radiated from the rear surface of each heating unit 20. In this case, the heat is limitedly transmitted to the rear portion of each heating unit 20 due to the heat insulating effect of the air layer formed between the reflecting members 50a, 50b, and 50c. Meanwhile, the far infrared rays are reflected by the reflecting members 50a, 50b, and 50c to be guided to the front of each heating unit 20. Thus, most of the thermal energy radiated from the rear surface of each heating unit 20 is transmitted to the front of the heating unit 20, thus being used for cooking the food.

As is apparent from the above description, the present invention provides a cooking apparatus which is provided with a plurality of reflecting members, thus reflecting far infrared rays radiated from a rear surface of a heating unit designed so that a front surface thereof faces food to be cooked. The reflecting members prevent heat generated from the heating unit from being transmitted to the rear portion of the heating unit due to an air layer provided between the reflecting members. Therefore, most of thermal energy generated from the heating unit may be used to cook the food.

Although a few preferred embodiments have been shown and described, it will be appreciated by those skilled in the art that various changes and modifications might be made without departing from the scope of the invention, as defined in the appended claims.

## Claims

1. A cooking apparatus, comprising:
a cabinet (10) to provide an opening (11) over which food to be cooked is laid;
a grill unit (30) seated in the opening (11) of the cabinet (10) to support the food over the opening (11);
one or more heating units (20) installed in the cabinet (10) to face the grill unit (30) and to transmit thermal energy to the grill unit (30) supporting the food laid thereon; **characterised in that** it comprises
a plurality of reflecting members (50a,50b,50c) provided at predetermined positions around each heating unit (20), the reflecting members (50a,50b,50c) installed to be spaced apart from each other by a predetermined gap to provide an air layer between the reflecting members (50a,50b,50c).

2. The cooking apparatus of claim 1, wherein:
the cabinet (10) is opened at a top surface thereof to provide the opening (11) over which food to be cooked is laid.

3. The cooking apparatus of claim 1 or 2, wherein:
the one or more heating units (20) are provided in the cabinet (10) so that a front surface thereof faces the grill unit (30) to radiate thermal energy to the grill unit (30).

4. The cooking apparatus of claim 1, 2 or 3, wherein:
the plurality of reflecting members (50a,50b,50c) are provided at predetermined positions around a rear surface of the one or more heating units (20).

5. The cooking apparatus according to any preceding claim, wherein at least one of the reflecting members (50a,50b,50c) comprises:
a projection (51) provided at a predetermined portion of at least one of the reflecting members (50a), and having an end supported by a neighboring reflecting member (50b) so that the at least one reflecting member (50a) and the neighboring reflecting member (50b) are spaced apart from each other by the predetermined gap.

6. The cooking apparatus according to any preceding claim, wherein the plurality of reflecting members (50a,50b,50c) surround upper, lower, and rear portions of the heating units (20), guiding the thermal energy generated from the heating units (20) to a front of the heating unit (20).

7. The cooking apparatus according to any preceding claim, wherein the thermal heat generated by the heating units (20) is repeatedly reflected by the reflecting members (50a,50b,50c) and limitedly transmitted to a portion of the heating units (20) due to a heating insulating effect of the air layer provided between the reflecting members (50a,50b,50c).

8. The cooking apparatus according to any preceding claim, wherein each of the heating units (20) includes a ceramic member with a heating element to generate the thermal energy.

9. The cooking apparatus according to any preceding claim, wherein the heating units (20) are respectively set in both sides of the cavity (12) so that the front surface of the heating units (20) are opposite to each other.

10. The cooking apparatus according to any preceding claim, wherein the heating units (20) are inclinedly arranged to tilt toward the opening (11) to transmit the thermal energy to the grill unit (30).

11. The cooking apparatus of any preceding claim, comprising:
a tray (40) to removably move in and out of the cabinet (10) through an opening provided at a front surface of the cabinet and to be received in a cavity (12) provided in an interior of the cabinet (10).

12. The cooking apparatus according to claim 11, wherein the tray (40) comprises:
a hump along a central axis thereof; and
reflecting plates (41) provided at both sides of the hump, to reflect the thermal energy from the heating units (20) to the grill unit (30).

13. The cooking apparatus according to claim 11 or 12, wherein a predetermined amount of water is contained in the tray (40) to prevent an excessive rise in temperature of the oil collecting groove and the reflecting plates (41), preventing the oil collected in the oil collecting groove from being burnt and adhered to the tray (40).

14. The cooking apparatus according to claim 12 or 13, wherein the reflecting plates (41) are respectively provided at predetermined positions below the grill unit (30) to reflect the thermal energy of the heating unit to the grill unit (30), so that the thermal energy reflected by the heat blocking member is guided to a central portion of the grill unit (30) by the reflecting plates (41).

15. The cooking apparatus according to claim 12, 13 or 14, further comprising:
oil collecting grooves (42) provided along an edge of the reflecting plates (41) to collect oil dropping from the food which is laid on the grill unit (30).

16. The cooking apparatus according to any preceding claim, wherein the grill unit (30) comprises:
a plurality of water tanks (31) seated on both sides of the cabinet (10) to contain water; and
a plurality of grill pipes (32) arranged between the water tanks (31) to connect the water tanks (31) to each other, and having hollow structures so that the water is supplied thereto from the water tanks (31) and flows therein.

17. The cooking apparatus according to claim 16, wherein the grill pipes (32) are continuously cooled by the water supplied by the water tanks (31), preventing the food supported by the grill pipes (32) from being burnt.

18. The cooking apparatus according to any preceding claim, further comprising:
a timer switch (13) to control an operation time of the heating units (20); and
a power switch (14) to control a heating temperature of the heating units (20).

19. A cooking apparatus according to claim 11 comprising first, second, and third reflecting members (50a,50b,50c) provided at predetermined positions around each heating unit.

## Revendications

1. Appareil de cuisson, comprenant :
- un boîtier (10) pour former une ouverture (11) sur laquelle est posé l'aliment à cuisiner ;
- une unité formant grille (30) située dans l'ouverture (11) du boîtier (10) pour supporter l'aliment au-dessus de l'ouverture (11) ;
- une ou plusieurs unités chauffantes (20) installées dans le boîtier (10) pour faire face à l'unité formant grille (30) et pour transmettre l'énergie thermique à l'unité formant grille (30) supportant l'aliment posé sur celle-ci ;
**caractérisé en ce qu'**il comprend
- une pluralité d'éléments de réflexion (50a, 50b, 50c) prévus à des emplacements prédéterminés autour de chaque unité chauffante (20), les éléments de réflexion (50a, 50b, 50c) installés de façon à être disposés à distance les uns des autres par un espacement prédéterminé pour former une couche d'air entre les éléments de réflexion (50a, 50b, 50c).

2. Appareil de cuisson selon la revendication 1, dans lequel le boîtier (10) est ouvert au niveau de sa surface supérieure pour former une ouverture (11) sur laquelle est posé l'aliment à cuisiner.

3. Appareil de cuisson selon la revendication 1 ou 2, dans lequel la ou les plusieurs unités chauffantes (20) sont prévues dans le boîtier (10) de sorte que sa surface avant soit en face de l'unité formant grille (30) pour rayonner l'énergie thermique vers l'unité formant grille (30).

4. Appareil de cuisson selon la revendication 1, 2 ou 3, dans lequel la pluralité d'éléments de réflexion (50a, 50b, 50c) est prévue à des emplacements prédéterminés autour d'une surface arrière d'une ou de plusieurs unités chauffantes (20).

5. Appareil de cuisson selon l'une quelconque des revendications précédentes, dans lequel au moins un des éléments de réflexion (50a, 50b, 50c) comprend une projection (51) prévue au niveau d'une partie prédéterminée d'au moins un des éléments de réflexion (50a), et présentant une extrémité supportée par un élément de réflexion adjacent (50b) de sorte que le au moins un élément de réflexion (50a) et l'élément de réflexion adjacent (50b) sont disposés à distance l'un de l'autre par un espacement prédéterminé.

6. Appareil de cuisson selon l'une quelconque des revendications précédentes, dans lequel la pluralité d'éléments de réflexion (50a, 50b, 50c) entoure les parties supérieure, inférieure et arrière des unités chauffantes (20), guidant l'énergie thermique générée par les unités chauffantes (20) vers une partie avant de l'unité chauffante (20).

7. Appareil de cuisson selon l'une quelconque des revendications précédentes, dans lequel la chaleur thermique générée par les unités chauffantes (20) est réfléchie à plusieurs reprises par les éléments de réflexion (50a, 50b, 50c) et transmise de manière limitée à une partie des unités chauffantes (20) du fait d'un effet d'isolation thermique de la couche d'air prévue entre les éléments de réflexion (50a, 50b, 50c).

8. Appareil de cuisson selon l'une quelconque des revendications précédentes, dans lequel chacune des unités chauffantes (20) comprend un élément en céramique avec un élément chauffant pour générer l'énergie thermique.

9. Appareil de cuisson selon l'une quelconque des revendications précédentes, dans lequel les unités chauffantes (20) sont disposées respectivement des deux côtés de la cavité (12) de sorte que les surfaces avant des unités chauffantes (20) sont opposées les unes aux autres.

10. Appareil de cuisson selon l'une quelconque des revendications précédentes, dans lequel les unités chauffantes (20) sont disposées de manière inclinée pour pencher vers l'ouverture (11) pour transmettre l'énergie thermique à l'unité formant grille (30).

11. Appareil de cuisson selon l'une quelconque des revendications précédentes, comprenant un plateau (40) destiné à être déplacé de manière amovible à l'intérieur et à l'extérieur du boîtier (10) à travers une ouverture prévue au niveau d'une surface avant du boîtier et à être reçu dans une cavité (12) prévue à l'intérieur du boîtier (10).

12. Appareil de cuisson selon la revendication 11, dans lequel le plateau (40) comprend :
- une bosse le long de son axe central ; et
- des plaques de réflexion (41) prévues des deux côtés de la bosse, pour réfléchir l'énergie thermique des unités chauffantes (20) vers l'unité formant grille (30).

13. Appareil de cuisson selon la revendication 11 ou 12, dans lequel une quantité prédéterminée d'eau est contenue dans le plateau (40) pour empêcher une augmentation excessive de la température de la rainure de récupération de graisse et des plaques de réflexion (41), empêchant la graisse récupérée dans la rainure de récupération de graisse d'être brûlée et de coller au plateau (40).

14. Appareil de cuisson selon la revendication 12 ou 13, dans lequel les plaques de réflexion (41) sont prévues respectivement à des emplacements prédéterminés en dessous de l'unité formant grille (30) pour réfléchir l'énergie thermique de l'unité chauffante vers l'unité formant grille (30), de sorte que l'énergie thermique réfléchie par l'élément de blocage thermique est guidée jusqu'à une partie centrale de l'unité formant grille (30) par les plaques de réflexion (41).

15. Appareil de cuisson selon la revendication 12, 13 ou 14, comprenant en outre des rainures de récupération de graisse (42) prévues le long d'un bord des plaques de réflexion (41) pour récupérer la graisse tombant goutte à goutte de l'aliment qui est posé sur l'unité formant grille (30).

16. Appareil de cuisson selon l'une quelconque des revendications précédentes, dans lequel l'unité formant grille (30) comprend :
- une pluralité de réservoirs d'eau (31) situés des deux côtés du boîtier (10) pour contenir l' eau ; et
- une pluralité de tubes de grille (32) disposés entre les réservoirs d'eau (31) pour relier l'un à l'autre les réservoirs d'eau (31), et présentant des structures creuses de sorte que l'eau est fournie par les réservoirs d'eau (31) aux tubes de grille et s'écoule à l'intérieur de ces derniers.

17. Appareil de cuisson selon la revendication 16, dans lequel les tubes de grille (32) sont refroidis en continu par l'eau fournie par les réservoirs d'eau (31), empêchant l'aliment supporté par les tubes de grille (32) d'être brûlé.

18. Appareil de cuisson selon l'une quelconque des revendications précédentes, comprenant en outre :
- une minuterie (13) pour commander une durée de fonctionnement des unités chauffantes (20) ; et
- un interrupteur d'alimentation (14) pour commander la température de chauffe des unités chauffantes (20).

19. Appareil de cuisson selon la revendication 11, comprenant un premier, un deuxième et un troisième élément de réflexion (50a, 50b, 50c) prévus à des emplacements prédéterminés autour de chaque unité chauffante.

## Patentansprüche

1. Kochgerät mit:
einem Gehäuse (10), um eine Öffnung (11) bereitzustellen, über die zu kochende Nahrungsmittel gelegt werden;
einer Grilleinheit (30), die in die Öffnung (11) des Gehäuses (10) eingepasst ist, um die Nahrungsmittel über der Öffnung (11) zu tragen;
einer oder mehreren Heizeinheiten (20), die in das Gehäuse (10) eingebaut sind, um der Grilleinheit (30) gegenüberzuliegen und thermische Energie zu der Grilleinheit (30), welche die darauf gelegten Nahrungsmittel trägt, zu übertragen;
**dadurch gekennzeichnet,**
**dass** es aufweist:
eine Mehrzahl an Reflexionsgliedern (50a, 50b, 50c), die an vorbestimmten Positionen um jede einzelne Heizeinheit (20) vorgesehen sind, und die Reflexionsglieder (50a, 50b, 50c) eingebaut sind, um über einen vorbestimmten Zwischenraum voneinander beabstandet zu sein, um eine Luftschicht zwischen den Reflexionsgliedern (50a, 50b, 50c) bereitzustellen.

2. Kochgerät nach Anspruch 1,
wobei das Gehäuse (10) an einer oberen Oberfläche geöffnet ist, um die Öffnung (11) bereitzustellen, über welche zu kochende Nahrungsmittel gelegt werden.

3. Kochgerät nach Anspruch 1 oder 2,
wobei:
die eine oder mehrere Heizeinheiten (20) in dem Gehäuse (10) vorgesehen sind, so dass eine Frontoberfläche davon der Grilleinheit (30) gegenüberliegt, um thermische Energie zu der Grilleinheit (30) abzustrahlen.

4. Kochgerät nach Anspruch 1, 2 oder 3,
wobei die Mehrzahl an Reflexionsgliedern (50a, 50b, 50c) an vorbestimmten Positionen um eine hintere Oberfläche der einen oder mehreren Heizeinheiten (20) vorgesehen sind.

5. Kochgerät nach einem vorhergehenden Anspruch,
wobei zumindest eines der Reflexionsglieder (50a, 50b, 50c) aufweist:
einen Vorsprung (51), der an einem vorbestimmten Abschnitt von zumindest einem der Reflexionsglieder (50a) vorgesehen ist, und ein Ende aufweist, das durch ein benachbartes Reflexionsglied (50b) abgestützt wird, so dass das zumindest eine Reflexionsglied (50a) und das benachbarte Reflexionsglied (50b) über den vorbestimmten Zwischenraum voneinander beabstandet sind.

6. Kochgerät nach einem vorhergehenden Anspruch,
wobei die Mehrzahl an Reflexionsgliedern (50a, 50b, 50c) obere, untere und hintere Abschnitte der Heizeinheiten (20) umgeben, und die von den Heizeinheiten (20) erzeugte thermische Energie zu einer Vorderseite der Heizeinheit (20) leiten.

7. Kochgerät nach einem vorhergehenden Anspruch,
wobei die durch die Heizeinheiten (20) erzeugte thermische Wärme wiederholt durch die Reflexionsglieder (50a, 50b, 50c) reflektiert wird und aufgrund eines Wärme isolierenden Effektes der zwischen den Reflexionsgliedern (50a, 50b, 50c) vorgesehenen Luftschicht zu einem Abschnitt der Heizeinheiten (20) begrenzt übertragen wird.

8. Kochgerät nach einem vorhergehenden Anspruch,
wobei jede der Heizeinheiten (20) ein Keramikglied mit einem Heizelement zum Erzeugen der thermischen Energie aufweist.

9. Kochgerät nach einem vorhergehenden Anspruch,
wobei die Heizeinheiten (20) in beiden Seiten des Hohlraumes (12) eingesetzt sind, so dass die Frontoberflächen der Heizeinheiten (20) einander gegenüberliegen.

10. Kochgerät nach einem vorhergehenden Anspruch,
wobei die Heizeinheiten (20) geneigt angeordnet sind, um sich zum Übertragen der thermischen Energie zu der Grilleinheit (30) in Richtung der Öffnung (11) zu neigen.

11. Kochgerät nach einem vorhergehenden Anspruch, mit:
einem Einsatz (40) zum herausnehmbaren Bewegen in und aus dem Gehäuse (10) durch eine Öffnung, die an einer Frontoberfläche des Gehäuses vorgesehen ist, und um in einem Hohlraum (12) aufgenommen zu werden, der in einem Inneren des Gehäuses (10) vorgesehen ist.

12. Kochgerät nach Anspruch 11,
wobei der Einsatz (40) aufweist:
eine Wölbung entlang einer zentralen Achse; und Reflexionsplatten (41), die an beiden Seiten der Wölbung vorgesehen sind, um die thermische Energie von den Heizeinheiten (20) zu der Grilleinheit (30) zu reflektieren.

13. Kochgerät nach Anspruch 11 oder 12,
wobei eine vorbestimmte Wassermenge in dem Einsatz (40) enthalten ist, um einen übermäßigen Temperaturanstieg der Ölsammelrinne und der Reflexionsplatten (41) zu verhindern, und zu verhindern, dass das in der Ölsammelrinne angesammelte Öl anbrennt und an dem Einsatz (40) anhaftet.

14. Kochgerät nach Anspruch 12 oder 13,
wobei die Reflexionsplatten (41) an vorbestimmten Positionen unterhalb der Grilleinheit (30) vorgesehen sind, um die thermische Energie der Heizeinheit zu der Grilleinheit (30) zu reflektieren, so dass die durch das Wärmeabschirmglied reflektierte thermische Energie durch die Reflexionsplatten (41) zu einem zentralen Abschnitt der Grilleinheit (30) reflektiert wird.

15. Kochgerät nach Anspruch 12, 13 oder 14, ferner mit:
Ölsammelrinnen (42), die entlang einer Kante der Reflexionsplatten (41) vorgesehen sind, um Öl aufzunehmen, das von den Nahrungsmitteln tropft, die auf die Grilleinheit (30) gelegt wurden.

16. Kochgerät nach einem vorhergehenden Anspruch,
wobei die Grilleinheit (30) aufweist:
eine Mehrzahl an Wasserbehältern (31), die auf beiden Seiten des Gehäuses (10) eingepasst sind, um Wasser zu enthalten; und
einer Mehrzahl an Grillleitungen (32), die zwischen den Wasserbehältern (31) angeordnet sind, um die Wasserbehälter miteinander zu verbinden, und die Hohlstrukturen aufweisen, so dass das Wasser von den Wasserbehältern (31) dorthin zugeführt wird und darin fließt.

17. Kochgerät nach Anspruch 16,
wobei die Grillleitungen (32) durch das von den Wasserbehältern (31) gelieferte Wasser ununterbrochen gekühlt werden, um ein Anbrennen der durch die Grillleitungen (32) getragenen Nahrungsmittel zu verhindern.

18. Kochgerät nach einem vorhergehenden Anspruch, ferner mit:
einem Zeitschalter (13) zum Regeln einer Betriebszeit der Heizeinheiten (20); und
einem Stromschalter (14) zum Regeln einer Heiztemperatur der Heizeinheiten (20).

19. Kochgerät nach Anspruch 11, mit:
ersten, zweiten und dritten Reflexionsgliedern (50a, 50b, 50c), die an vorbestimmten Positionen um jede einzelne Heizeinheit vorgesehen sind.
